(19) Europäisches Patentamt
European Patent Office
Office européen des brevets

(11) Numéro de publication: **0 112 756**
**B1**

(12) # FASCICULE DE BREVET EUROPEEN

(45) Date de publication du fascicule du brevet: **05.02.86**

(51) Int. Cl.[4]: **C 09 K 5/00**

(21) Numéro de dépôt: **83402370.7**

(22) Date de dépôt: **08.12.83**

(54) **Procédé de traitement de fluides aqueux en vue de réduire la corrosion des métaux en leur contact.**

(30) Priorité: **27.12.82 FR 8221796**

(43) Date de publication de la demande:
**04.07.84 Bulletin 84/27**

(45) Mention de la délivrance du brevet:
**05.02.86 Bulletin 86/6**

(84) Etats contractants désignés:
**AT BE CH DE FR GB IT LI LU NL SE**

(56) Documents cités:
**DE - A - 2 650 228**
**FR - A - 2 489 355**
**GB - A - 893 290**
**US - A - 2 726 215**

(73) Titulaire: **BP Chimie Société Anonyme, Tour Neptune - La Défense 1 20, place de Seine, F-92400 Courbevoie (FR)**

(72) Inventeur: **Matteodo, Jean Baptiste, 7, Le Haut Touret, F-13500 Martigues (FR)**
Inventeur: **Tucoulat, Marcel, Les Platanes 10 rue E. Amavet, F-13500 Martigues (FR)**
Inventeur: **Mousselard, Pascal, 4, avenue Henri Pontier, F-13100 Aix en Provence (FR)**

(74) Mandataire: **Delgrange, Jean Paul, BP Chimie Tour Neptune Cedex No 20, F-92086 Paris la Défense 1 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 112 756 B1

LIBER, STOCKHOLM 1986

## Description

La présente invention concerne un procédé de traitement de fluides aqueux de transfert de chaleur utilisés dans les circuits de refroidissement ou de chauffage d'échangeurs thermiques, en vue de réduire la corrosion des métaux au contact de ces fluides.

Il est connu d'utiliser des fluides de transfert de chaleur, constitués principalement d'eau, dans des échangeurs thermiques comme, par exemple, les circuits de chauffage central ou de refroidissement des moteurs à combustion interne. Généralement, le fluide de transfert de chaleur vient au contact de divers metaux ou alliages constituant les différentes parties de ces circuits, comme, par exemple, le cuivre, le laiton, l'acier, la fonte, l'aluminium et les alliages d'étain formant les soudures. Ainsi, les problèmes de corrosion deviennent particulièrement difficiles et complexes, non seulement en raison de la nécessité de protéger individuellement chacun des métaux ou alliages contre la corrosion, mais aussi en raison de phénomènes électrolytiques qui peuvent apparaître entre les différents métaux ou alliages présents.

Dans le cas de certains circuits d'échangeurs thermiques tels que ceux de refroidissement des moteurs à combustion interne, notamment ceux fonctionnant sur les véhicules automobiles, les problèmes de protection contre la corrosion font en particulier intervenir le fait que les fluides aqueux de transfert de chaleur utilisés contiennent généralement des antigels, notamment en période hivernale. Ces antigela sont constitués généralement de composés organiques tels que le monoéthylèneglycol, le monopropylèneglycol, ou leurs homologues immédiatement supérieurs. A ces antigels, on ajoute généralement, en faible proportion, divers additifs tels que, par exemple, des inhibiteurs de corrosion. Les compositions d'antigel ainsi obtenues sont mélangées avec l'eau pour préparer le fluide de transfert de chaleur prêt à l'emploi. Le rapport de la quantité d'antigel à celle d'eau est déterminé par le point de congélation désiré du fluide. Il peut par exemple varier entre 0,1 et 1,0 en poids.

On connaît déjà de nombreux inhibiteurs de corrosion, solubles dans l'eau, dans le monoéthylèneglycol, le monopropylèneglycol ou leurs homologues immédiatement supérieurs. Il s'agit le plus souvent d'inhibiteurs minéraux, comme, par exemple, des sels de métaux alcalins, tels que des chromates, des bichromates, des nitrites, des silicates, des phosphates, des polyphosphates et des borates. Toutefois, ces inhibiteurs de corrosion présentent de sérieux inconvénients. Ainsi, par exemple, les chromates et les bichromates sont des composés toxiques, les nitrites peuvent être décomposés par des bactéries, les phosphates et polyphosphates sont peu compatibles avec les eaux dures, les silicates peuvent se déooser lentement sur les parois des échangeurs de chaleur sous forme de gel siliceux hydraté, et les borates peuvent occasionner une augmentation inacceptable de la corrosion de l'aluminium et des alliages d'étain constituant les soudures des circuits.

Il est connu, également, d'utiliser des inhibiteurs de corrosion organiques, comme par exemple des amines ou des benzoates. Bien que les amines ne soient pas considérées, en général, comme des substances toxiques, il peut arriver que lors de mélanges de différents antigels dans le même circuit de refroidissement, il se forme, par réaction entre une amine et un nitrite, une nitrosamine considérée comme cancérigène. De leur côté, pour assurer une protection efficace contre la corrosion des métaux, les benzoates doivent être utilisés à concentration relativement élevée et être associés à d'autres inhibiteurs de corrosion comme les nitrites, ce qui limite leur intérêt.

D'autres inhibiteurs de corrosion tels que les sels des acides mono- ou dicarboxyliques comme l'acide succinique et l'acide adipique ont également été utilisés. Ces additifs inhibiteurs de corrosion qui doivent être utilisés à concentration relativement élevée, ne sont efficaces que vis-à-vis de l'acier et de la fonte.

Il est égalemént connu d'utiliser des polyols, comme additifs inhibiteurs de corrosion, en particulier, des pentols, des hexols ou des sucres, tels que le sorbitol, le galactose, le glucose, le fructose et le maltose. Ces polyols sont d'excellents inhibiteurs de corrosion de l'aluminium ou de ses alliages. Cependant, leur efficacité reste limitée à ce métal, à condition en outre que celui-ci ne soit pas en contact avec d'autres métaux.

Enfin, il est connu d'utiliser des sels alcalins des acides polycarboxyliques hydroxylés, tels que ceux de l'acide citrique, de l'acide malique, de l'acide tartrique ou de l'acide mucique. Ces additifs ont l'avantage de ne pas être toxiques et d'être biodégradables, mais ils ne sont pas suffisamment efficaces pour contrôler la corrosion de la plupart des métaux usuels.

La demanderesse a maintenant trouvé que l'addition simultanée de certains sels d'acides aliphatiques dicarboxyliques et de certains polyols aux fluides aqueux de transfert de chaleur permet d'obtenir, par un effet de synergie, une protection extrêmement efficace contre la corrosion de la fonte, de l'aluminium et de ses alliages, et des soudures à base d'étain, en contact avec ces fluides aqueux. Ce nouveau couplé d'additifs inhibiteurs de corrosion assure, en outre, une bonne protection de l'acier.

La présente invention a donc pour objet un procédé de traitement de fluides aqueux utilisés dans des échangeurs thermiques, en vue de réduire la corrosion de métaux ou d'alliages en contact avec ces fluides, le procédé étant caractérisé en ce que l'on ajoute aux fluides aqueux 0,05 à 5 % en poids, de préference 0,1 à 2,5 % en poids, d'un ou plusieurs sels de métaux alcalins ou d'amines d'acides aliphatiques dicarboxyliques, de formule $(CH_2)_n(COOH)_2$ dans

laquelle n est compris entre 2 et 10, et 0,05 à 2,5 % en poids, de préférence 0,1 à 1,5 % en poids d'un ou plusieurs polyols, comportant un nombre d'atomes de carbone compris entre 5 et 12 et un nombre de fonctions alcool compris entre 5 et 12 et ne possédant pas de pouvoir réducteur.

Selon l'invention, on peut utiliser un ou plusieurs sels des métaux alcalins en particulier les sels de sodium et de potassium, ou d'amines notamment d'alcanolamines telles que la triéthanolamine de l'un quelconque des acides aliphatiques dicarboxyliques, de formule $(CH_2)_n(COOH)_2$, cités ci-dessus. Toutefois, on préfère utiliser les sels de sodium des acides aliphatiques dicarboxyliques pour lesquels $4 \leqq n$ ý10.

Ces sels peuvent être formés par addition aux fluides aqueux de transfert de chaleur d'une part de l'acide aliphatique dicarboxylique, et d'autre part d'un hydroxyde d'un métal alcalin ou d'une amine en quantité stoechiométrique.

Comme polyols, on peut utiliser, selon l'invention, les pentols, les hexols et les sucres ne possédant pas de pouvoir réducteur. On préfère, toutefois, utiliser le sorbitol, le xylitol, le mannitol et le saccharose.

Dans le cas d'un fluide aqueux de transfert de chaleur, contenant un antigel tel que le monoéthylèneglycol, le monopropylèneglycol ou leurs homologues immédiatement supérieurs, il peut être avantageux d'ajouter les additifs inhibiteurs de corrosion, selon l'invention, à l'antigel lui-même, avant mélange de ce dernier avec l'eau. Dans ce cas, on obtient ainsi une composition d'antigel contenant de 0,5 à 8 % en poids, de préférence de 1 à 5 % en poids de sel d'acide aliphatique dicarboxylique, et de 0,5 à 5 % en poids, de préférence de 1 à 3 % en poids de polyol.

On peut également ajouter aux fluides aqueux de transfert de chaleur, ou aux compositions d'antigel utilisées pour les préparer, d'autres additifs tels que certains inhibiteurs de corrosion spécifiques, comme le tolutriazole et/ou le métasilicate de sodium, des bases minérales ou organiques destinées à neutraliser les acides et pouvant constituer une réserve d'alcalinité telles que les alcanolamines, des agents tampons tels que le tétraborate de sodium décahydraté, des additifs antimousse et antidépôt tels que des produits de polyaddition d'oxyde d'éthylène et d'oxyde de propylène sur 1,eau ou un alcool.

Ainsi, une composition d'antigel, utilisée pour préparer un fluide aqueux de refroidissement des moteurs à combustion interne, peut être obtenue par mélange de: - 85 % à 95 % en poids de glycol tel que le monoéthy

lèneglycol, le monopropylèneglycol ou leurs homologuesimmédiatement supérieurs,

- 0,5 à 5 % en poids d'un ou plusieurs polyols comportant un nombre d'atomes de carbone compris entre 5 et 12 et un nombre de fonctions alcool compris entre 5 et 12, et ne possédant pas de pouvoir réducteur,
- 0,5 à 5 % en poids d'un ou plusieurs acides aliphatiques dicarboxyliques, de formule $(CH_2)_n(COOH)_2$ dans laquelle n est compris entre 2 et 10,
- un hydroxyde alcalin tel que l'hydroxyde de sodium ou de potassium en quantité stoechiométrique pour former le sel alcalin du ou des acides aliphatiques dicarboxyliques mis en oeuvre,
- 0 % à 2,50 % en poids d'une alcanolamine primaire, secondaire ou tertiaire, telle que la monoéthanolamine, la monopropanolamine, ou la triéthanolamine,
- 0,5 à 1 % en poids d'un sel d'un métal alcalin ou d'ammonium de l'acide borique, tel que le tétraborate de sodium décahydraté, appelé 'Borax',
- 0,025 % à 1 % en poids d'un inhibiteur de corrosion du cuivre et de ses alliages, choisi parmi les composés azotés hétérocycliques ou polycycliques, tels que le tolutriazole, le benzotriazole, ou un dérivé aminé du benzotriazole de formule :

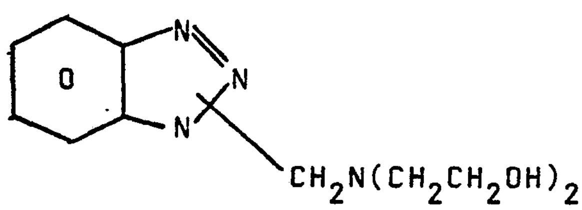

- 0,025 à 0,25 % en poids, plus particulièrement 0,025 à 0,15 % en poids d'un silicàte de métal alcalin ou d'ammonium, de préférence un métasilicate de sodium hydraté,
- 0,005 à 0,025 % en poids d'un produit de polyaddition séquencée ou statistique d'oxyde d'éthylène et d'oxyde de propylène sur 1,eau.

Une telle composition d'antigel peut être mélangée à l'eau, à raison de 0,1 à 1 partie en poids par partie en poids d'eau, pour former un fluide aqueux de transfert de chaleur particulièrement apte à empêcher le développement de la corrosion des métaux et alliages en contact desquels il se trouve, tels que la fonte, l'acier, l'aluminium et ses alliages, le cuivre et ses alliages, ainsi que les soudures à base d'étain.

La présente invention est illustrée par les exemples qui suivent.

**Exemple 1**

On prépare par mélange une composition d'anti gel à base de monoéthylèneglycol, contenant comme additifs :

- 2,00 % en poids de sorbitol,
- 2,35 % en poids d'acide adipique,
- 1,30 % en poids de soude (quantité stoechiométrique pour former l'adipate disodique).
- 1,30 % en poids de triéthanolamine,
- 0,75 % en poids de tétraborate de sodium décahydraté,

- 0,10 % en poids de tolutriazole,
- 0,10 % en poids de métasilicate et
- 30 ppm d'antimousse.

Des essais de résistance à la corrosion d'éprouvettes métalliques sont réalisés par immersion dans une solution dans l'eau de la composition d'antigel préparée précédemment. Les qualités des métaux ou des alliages utilisés, ainsi que toutes les conditions opératoires de ces essais sont définies par la norme ASTM D 1384/70. La corrosion est mise en évidence par la variation de poids de chaque éprouvette (exprimée en milligrammes) au bout d'un temps déterminé. Les résultats sont donnés dans le tableau I.

Les propriétés anticorrosives du système d'additifs employé sont excellentes pour l'ensemble des métaux ou alliages examinés,puisque les variations de poids par éprouvette sont toujours très inférieures à 10 mg, valeur considérée comme limite de la corrosion acceptable

**Exemples 2 à 5**

Dans ces exemples, on opère comme à l'exemple 1, excepté que,lors de la préparation de la composition d'antigel, on utilise à la placé de 2,35 % en poids d'acide adipique et de 1,30 % en poids de soude :

- 2,35 % en poids d'acide sébacique et 0,95 % en poids de soude, à l'exemple 2
- 2,35 % en poids d'acide succinique et 1,60 % en poids de soude, à l'exemple 3 ;
- 1,50 % en poids d'acide azélaïque et 0,65 % en poids de soude, à l'exemple 4 ;
- 2,35 % en poids d'un mélange d'acides constitué par 0,70 % en poids d'acide succinique, 1,05 % en poids d'acide glutarique, 0,60 % en poids d'acide adipique et 1,45 % en poids de soude, à l'exemple 5.

Les résultats des exemples 2 à 5 sont fournis dans le tableau I. L'examen de ce tableau montre que l'association du sorbitol avec des sels de sodium de divers acides aliphatiques dicarboxyliques conduit à d'excellentes propriétés anticorrosives vis-à-vis des métaux et alliages considérés.

**Exemples 6 à 10**

Dans les exemples comparatifs 6 et 7, on opère comme à l'exemple 1, excepté que,lors de la préparation de la composition d'antigel, on utilise à la placé de 2,0 % en poids de sorbitol, de 2,35 % en poids d'acide adipique et de 1,30 % en poids de soude:

- 4,0 % en poids d'acide sébacique et 1,60 % en poids de soude, à l'exemple comparatif 6 ;
- 2,00 % en poids d'acide sébacique et 0,80 % en poids de soude, à l'exemple comparatif 7.

Aux exemples 8 et 9, on opère comme à l'exemple 1, excepté que lors de la préparation de la composition d'antigel, on utilise à la placé de 2,35 % en poids d'acide adipique et 1,30 % en poids de soude :

- 1,00 % en poids d'acide sébacique et 0,40 % en poids de soude, à l'exemple 8 ;
- pas d'acide aliphatique dicarboxylique et pas de soude à l'exemple comparatif 9.

Dans l'exemple comparatif 10, on opère comme à l'exemple 1, excepté que lors de la préparation de la composition d'antigel, on utilise à la placé de 2,00 % en poids de sorbitol, de 2,35 % en poids d'acide adipique et de 1,30 % en poids de soude, uniquement 4,00 % en poids de sorbitol.

Les résultats des exemples 6 à 10 sont rassemblés dans le tableau II. L'examen de ce tableau montre que l'addition simultanée de sorbitol et d'une faible quantité du sel de sodium de l'acide sébacique permet d'obtenir, de façon inattendue,une protection extrêmement efficace contre la corrosion de la soudure à base d'étain, de la fonte et de l'aluminium en contact avec le fluide aqueux de transfert de chaleur.

**Exemples 11 et 12**

Dans ces exemples, on opère comme à l'exemple 1, excepté que, lors de la préparation de la composition d'antigel, on utilise à la placé de 2,35 % en poids d'acide adipique et de 1,30 % en poids de soude :

- 2,00 % en poids d'acide adipique et 1,10 % en poids de soude, à l'exemple 11 ;
- 1,00 % en poids d'acide adipique et 0,55 % en poids de soude, à l'exemple 12.

Les résultats des exemples 11 et 12, ainsi que ceux des exemples 1 et 9 sont rassemblés dans le tableau III. L'analyse de ce tableau montre en particulier qu'à concentration constante en sorbitol, il existe un seuil de concentration en sel de sodium d'acide adipique en dessous duquel la protection de la fonte, de l'acier, de l'aluminium et de la soudure à base d'étain n'est plus assurée convenablement (variations de poids de l'éprouvette supérieure à 10 mg).

**Exemples 13 et 14**

Dans ces exemples, on opère comme à l'exemple 1, excepté que,lors de la préparation de la composition d'antigel, on utilise à la placé de 2,00 % en poids de sorbitol:

- pas de sorbitol, à l'exemple comparatif 13 ;
- 1,00 % en poids de sorbitol, à l'exemple 14.

Les résultats des exemples 13 et 14, ainsi que ceux de l'exemple 1, sont rassemblés dans le tableau IV. L'examen de ce tableau permet de montrer qu'à concentration constante en sel de sodium d'acide adipique, il existe une

concentration minimum en sorbitol pour assurer une bonne protection contre la corrosion de la fonte, de l'aluminium et de la soudure à base d'étain.

**Exemples 15 à 19**

Dans ces exemples, on opère comme à l'exemple 1, excepté que lors de la préparation de la composition d'antigel, on utilise à la placé de 2,00 % en poids de sorbitol:

- 2,00 % en poids de mannitol, à l'exemple 15 ;
- 2,00 % en poids de saccharose, à l'exemple 16 ;
- 2,00 % en poids de glucose, à l'exemple comparatif 17 ;
- 2,00 % en poids de maltose, à l'exemple comparatif 18. Enfin dans l'exemple 19, on opère comme dans l'exemple 1, excepté que, pour la préparation de la composition d'antigel, on utilise à la placé de 2,00 % en poids de sorbitol, de 2,35 % en poids d'acide adipique et 1,30 % en poids de soude, uniquement 2,35 % en poids d'adipate de sorbitol.

Les résultats des exemples 15 à 19 sont rassemblés dans le tableau V. L'examen de ce tableau montre l'influence de la nature du polyol utilisé en association avec le sel de sodium de l'acide adipique sur les propriétés anticorrosives. Selon ces exemples, on peut utiliser un polyol de type hexol, comme le mannitol (exemple 15), ainsi qu'un sucre de type disaccharide, ne possédant pas de pouvoir réducteur, comme le saccharose (exemple 16), en association avec le sel de sodium de l'acide adipique pour obtenir d'excellentes propriétés anticorrosives sur les métaux examinés.

Par contre, des sucres présentant un pouvoir réducteur, de type aldose, comme le glucose (exemple 17), ou de type disaccharide, comme le maltose (exemple 18), en association avec le sel de sodium de l'acide adipique, conduisent à des systèmes anticorrosifs très peu effecaces en particulier vis-à-vis de la fonte et du cuivre.

Selon l'exemple 19, on met en oeuvre, en l'absence de soude, le couplé constitué d'acide adipique et de sorbitol sous forme d'adipate de sorbitol. Les propriétés anticorrosives du système inhibiteur sont relativement médiocres vis-à-vis, en particulier, de la fonte et de la soudure.

**Exemples 20 et 21**

Dans ces exemples, on opère comme à l'exemple 1, excepté que,lors de la préparation de la composition d'antigel, on utilise à la placé de 2,00 % en poids de sorbitol, de 2,35 % en poids d'acide adipique et de 1,30 % en poids de soude :

- 2,00 % en poids de saccharose, 1,50 % en poids d'acide azélaïque et 0,65 % en poids de soude, à l'exemple 20 ;
- 2,00 % en poids de saccharose, 1,00 % en poids d'acide sébacique et 0,40 % en poids de soude, à l'exemple 21.

Les résultats des exemples 20 et 21, ainsi que ceux de l'exemple 16 sont rassemblés dans le tableau VI. L'examen de ce tableau montre que les associations saccharose/sel de sodium de l'acide azélaïque (exemple 20) et saccharose/sel de sodium de l'acide sébacique (exemple 21) ont, pour des concentrations en acide très faibles, une action remarquable comme inhibiteurs de corrosion de l'ensemble des métaux et alliages examinés.

TABLEAU I

| Exemple | Polyol | | Acide dicarboxylique | | Variations de poids en mg/éprouvette (ASTM D 1384/70) | | | | | |
|---|---|---|---|---|---|---|---|---|---|---|
| | Nature | % en poids | Nature | % en poids | Cuivre | Soudure | Laiton | Acier | Fonte | Aluminium |
| 1 | Sorbitol | 2,0 | Acide adipique | 2,35 | - 1 | - 1 | - 2 | + 1 | - 2 | + 3 |
| 2 | Sorbiton | 2,0 | Acide sébacique | 2,35 | - 1 | - 1 | - 2 | 0 | | - 1 |
| 3 | Sorbitol | 2,0 | Acide succinique | 2,35 | - 1 | - 1 | - 1 | 0 | - 2 | 0 |
| 4 | Sorbitol | 2,0 | Acide azélaïque | 1,50 | - 3 | - 3 | - 2 | + 1 | + 2 | + 2 |
| 5 | Sorbitol | 2,0 | Mélange d'acides | 2,35 | - 5 | - 3 | - 3 | + 3 | - 6 | + 2 |

TABLEAU II

| Exemple | Polyol | | Acide dicarboxylique | | Variations de poids en mg/éprouvette (ASTM D 1384/70) | | | | | |
|---|---|---|---|---|---|---|---|---|---|---|
| | Nature | % en poids | Nature | % en poids | Cuivre | Soudure | Laiton | Acier | Fonte | Aluminium |
| 6 | - | - | Acide sébacique | 4,0 | - 4 | - 8 | - 5 | 0 | - 4 | - 7 |
| 7 | - | - | Acide sébacique | 2,0 | - 3 | - 16 | - 3 | 0 | - 15 | - 20 |
| 8 | Sorbitol | 2,0 | Acide sébacique | 1,0 | - 3 | - 2 | - 2 | 0 | + 1 | + 2 |
| 9 | Sorbitol | 2,0 | - | - | - 5 | - 15 | - 6 | - 40 | - 62 | - 15 |
| 10 | Sorbitol | 4,0 | - | - | - 6 | - 13 | - 9 | - 45 | - 74 | - 9 |

TABLEAU III

| Exemple | Polyol | | Acide dicarboxylique | | Variations de poids en mg/éprouvette (ASTM D 1384/70) | | | | | |
|---|---|---|---|---|---|---|---|---|---|---|
| | Nature | % en poids | Nature | % en poids | Cuivre | Soudure | Laiton | Acier | Fonte | Aluminium |
| 1 | Sorbitol | 2,0 | Acide adipique | 2,35 | - 1 | - 1 | - 2 | + 1 | - 2 | + 3 |
| 11 | Sorbitol | 2,0 | Acide adipique | 2,00 | - 3 | - 5 | - 3 | 0 | - 6 | - 3 |
| 12 | Sorbitol | 2,0 | Acide adipique | 1,00 | - 2 | - 6 | - 3 | 0 | - 12 | - 3 |
| 9 | Sorbitol | 2,0 | - | - | - 5 | - 15 | - 6 | - 40 | - 62 | - 15 |

TABLEAU IV

| Exemple | Polyol | | Acide dicarboxylique | | Variations de poids en mg / éprouvette (ASTM D 1384/70) | | | | | |
|---|---|---|---|---|---|---|---|---|---|---|
| | Nature | % en poids | Nature | % en poids | Cuivre | Soudure | Laiton | Acier | Fonte | Aluminium |
| 13 | - | - | Acide adipique | 2,35 | - 3 | - 20 | - 3 | 0 | - 17 | - 25 |
| 14 | Sorbitol | 1,0 | Acide adipique | 2,35 | - 4 | - 12 | - 4 | - 3 | - 8 | - 14 |
| 1 | Sorbitol | 2,0 | Acide adipique | 2,35 | - 1 | - 1 | - 2 | + 1 | - 2 | + 3 |

TABLEAU V

| Exemple | Polyol | | Acide dicarboxylique | | Variations de poids en mg/éprouvette (ASTM D 1384/70) | | | | | |
|---|---|---|---|---|---|---|---|---|---|---|
| | Nature | % en poids | Nature | % en poids | Cuivre | Soudure | Laiton | Acier | Fonte | Aluminium |
| 15 | Mannitol | 2,0 | Acide adipique | 2,35 | 0 | - 2 | - 1 | + 1 | - 1 | 0 |
| 16 | Saccharose | 2,0 | Acide adipique | 2,35 | - 3 | - 4 | - 3 | - 2 | - 6 | + 3 |
| 17 | Glucose | 2,0 | Acide adipique | 2,35 | Essai interrompu après 12 heures : solution très colorée, très forte corrosion de la fonte en particulier. | | | | | |
| 18 | Maltose | 2,0 | Acide adipique | 2,35 | Essai interrompu après 48 heures : solution très colorée, forte corrosion de la fonte, transfert électrolytique d'ions cuivreux. | | | | | |
| 19 | - | - | Adipate de sorbitol | 2,35 | - 6 | - 12 | - 5 | - 3 | - 15 | - 5 |

TABLEAU VI

| Exemple | Polyol | | Acide dicarboxylique | | Variations de poids en mg/ éprouvette (ASTM D 1384/70) | | | | | |
|---|---|---|---|---|---|---|---|---|---|---|
| | Nature | % en poids | Nature | % en poids | Cuivre | Soudure | Laiton | Acier | Fonte | Aluminium |
| 16 | Saccharose | 2,0 | Acide adipique | 2,35 | - 3 | - 4 | - 3 | - 2 | - 6 | + 3 |
| 20 | Saccharose | 2,0 | Acide azélaïque | 1,50 | - 2 | - 2 | - 2 | - 2 | + 1 | + 2 |
| 21 | Saccharose | 2,0 | Acide sébacique | 1,00 | - 2 | - 2 | - 2 | 0 | - 1 | 0 |

## Revendications

1/ Procédé de traitement de fluides aqueux de transfert de chaleur utilisés dans les circuits de chauffage ou de refroidissement d'échangeurs thermiques, en vue de réduire la corrosion des métaux et alliages en contact avec ces fluides, procédé caractérisé en ce que l'on ajoute aux fluides aqueux de transfert de chaleur, à titre d'inhibiteurs de corrosion, d'une part de 0,05 % à 5 % en poids d'un ou plusieurs sels de métaux alcalins ou d'amines des acides aliphatiques dicarboxyliques, de formule $(CH_2)_n(COOH)_2$ dans laquelle n est compris entre 2 et 10, et d'autre part de 0,05 % à 2,5 % en poids d'un ou plusieurs polyols comportant un nombre d'atomes de carbone compris entre 5 et 12 et un nombre de fonctions alcool compris entre 5 et 12 et ne possédant pas de pouvoir réducteur.

2/ Procédé selon la revendication 1, caractérisé en ce que les sels des acides aliphatiques

dicarboxyliques utilisés sont les sels de sodium ou de potassium, ou des sels d'amines ou d'alcanolamines de l'acide adipique, de l'acide azélaïque ou de l'acide sébacique, et en ce que les polyols utilisés sont le sorbitol, le xylitol, le mannitol ou le saccharose.

3/ procédé selon la revendication 1, caractérisé en ce que les fluides aqueux de transfert de chaleur sont constitués de :
- 50 % à 90 % en poids d'eau, et de
- 10 % à 50 % en poids d'antigel à base de monoéthylèneglycol, de monopropylèneglycol ou de leurs homologues immédistement supérieurs.

4/ Procédé selon la revendication 1, caractérisé en ce que le fluide aqueux de transfert de chaleur contient en faibles proportions des additifs divers tels que des agents tampons, antimousse et antidépôt, ainsi que d,autres inhibiteurs de corrosion.

5/ Procédé selon la revendication 3, caractérisé en ce que les sels des acides aliphatiques dicarboxyliques et les polyols sont ajoutés à l'antigel, à raison de 0,5 à 8 % en poids de sel d'acide aliphatique dicarboxylique et de 0,5 à 5 % en poids de polyol par rapport à l'antigel, préalablement au mélange de celui-ci avec l'eau.

6. Fluides aqueux de transfert de chaleur, additionnés de sels d'acides aliphatiques dicarboxyliques et de polyols, obtenus selon le procédé décrit dans l'une quelconque des revendications à 4 incluse.

7/ Compositions d'antigel obtenues selon la revendication 5, par addition de sels d'acides aliphatiques dicarboxyliques et de polyols à l'antigel, préalablement au mélange de celui-ci avec l'eau, ces compositions d'antigel pouvant contenir en outre des additifs tels que des agents tampons, antimousse et antidépôt, sinsi que d'autres inhibiteurs de corrosion.

## Patentansprüche

1. Verfahren zur Behandlung von wäßrigen Flüssigkeiten zur Wärmeübertragung, die in Heiz- oder Kühlkreisläufen von Wärmeaustauschern verwendet werden, hinsichtlich der Verminderung der Korrosion der Metalle und Legierungen, die mit diesen Flüssigkeiten in Berührung sind, wobei das Verfahren dadurch gekennzeichnet ist, daß man zu den wäßrigen Flüssigkeiten zur Wärmeübertragung als Korrosions-Hemmstoffe, einerseits 0,05 % bis 5 Gew.-% eines oder mehrerer Salze von Alkalimetallen oder Aminen von aliphatischen Dicarbonsäuren der Formel $(CH_2)_n(COOH)_2$, wobei n einen Wert zwischen 2 und 10 bedeutet, und andererseits 0,05 % bis 2,5 Gew.-% eines oder mehrerer polyole mit einer Anzahl an Kohlenstoffatomen zwischen 5 und 12 und einer Anzahl an Alkoholgruppen zwischen 5 und 12 und ohne Reduktionskraft, zugibt.

2. Verfahren nach Anspruch 1, dadurch gekennzeichnet, daß die eingesetzten Salze der aliphatischen Dicarbonsäuren die Natrium- oder Kaliumsalze oder Aminoder Alkanolaminsalze der Adipin-, Azelain- oder Sebacinsäure sind und, daß die eingesetzten polyole Sorbit, Xylit, Mannit oder Saccharose sind.

3. Verfahren nach Anspruch 1, dadurch gekennzeichnet, daß die wäßrigen Flüssigkeiten zur Wärmeübertragung bestehen aus:
- 50 % bis 90 Gew.-% Wasser, und
- 10 % bis 50 Gew.-% Frostschutzmittel auf der Grundlage von Monoethylenglykol, Monopropylenglykol oder deren unmittelbar höheren Homologen.

4. Verfahren nach Anspruch 1, dadurch gekennzeichnet, daß die wäßrige Flüssigkeit zur Wärmeübertragung in geringen Verhältnissen verschiedene Zusatzstoffe wie Puffer-, Antischaum- und Antiablagerungsmittel, sowie andere Korrosions-Hemmstoffe enthält.

5. Verfahren nach Anspruch 3, dadurch gekennzeichnet, daß die Salze der aliphatischen Dicarbonsäuren und die Polyole zu dem Frostschutzmittel im Verhältnis von 0,5 bis 8 Gew.-% Salz der aliphatischen Dicarbonsäure und 0,5 bis 5 Gew.-% Polyol bezogen auf das Frostschutzmittel vor dessen Durchmischung mit Wasser zugegeben werden.

6. Wäßrige Flüssigkeiten zur Wärmeübertragung mit dem Zusatz von Salzen aliphatischer Dicarbonsäuren und von Polyolen, erhalten nach dem in einem der Ansprüche 1 bis einschließlich 4 beschriebenen Verfahren.

7. Frostschutzmittelzusammensetzungen, erhalten nach Anspruch 5, durch Zugabe von Salzen aliphatischer Dicarbonsäuren und von Polyolen zu dem Frostschutzmittel vor dessen Durchmischung mit Wasser, wobei diese Frostschutzmittelzusammensetzungen außerdem Zusatzstoffe wie Puffer-, Antischaum- und Antiablagerungsmittel, sowie andere Korrosions-Hemmstoffe enthalten können.

## Claims

1. Process for the treatment of aqueous heat transfer fluids used in heating or cooling circuits of heat exchangers, with a view to reducing corrosion of the metals and alloys in contact with these fluids, this process being characterised in that there is added to the aqueous heat transfer fluids by way of corrosion inhibitors, on the one hand 0.05% to 5% by weight of one or more salts of alkali metals or amines of dicarboxylic aliphatic acids, of the formula $(CH_2)_n(COOH)_2$ in which n is comprised between 2 and 10, and on the other hand, from 0.05% to 2.5% by weight of one or more polyols comprising a number of carbon atoms between 5 and 12 and a number of alcohol groups between 5 and 12 and mot possessing any reducing power.

2. Process according to Claim 1, characterised in that the salts of the dicarboxylic aliphatic acids employed are sodium or potassium salts, or salts of amines or alkanolamines of adipic acid, azelaic

acid or sebacic acid, and in that the polyols employed are sorbitol, xylitol, mannitol or saccharose.

3. Process according to Claim 1, characterised in that the aqueous heat transfer fluids consist of:

- 50 to 90% by weight of water, and
- 10 tc 50% by weight of antifreeze based on monoethyleneglycol, monopropyleneglycol or their next higher homologues.

4. Process according to Claim 1, characterised in that the aqueous heat transfer fluid contains in low proportions various additives such as buffering agents, antifoaming and anti-deposit agents, and also other corrosion inhibitors.

5. Process according to Claim 3, characterised in that the salts of dicarboxylic aliphatic acids and the polyols are added to the antifreeze at the rate of 0.5 to 8% by weight of dicarboxylic aliphatic acid salt and from 0.5 to 5% by weight of polyol in relation to the antifreeze, prior to the mixture of the latter with water.

6. Aqueous heat transfer fluids, to which the salts of dicarboxylic aliphatic acids and polyols have been added, obtained according to the process described in any of Claims 1 to 4 inclusive.

7. Antifreeze compositions obtained according to Claim 5, by the addition of salts of dicarboxylic aliphatic acids and polyols to the antifreeze, preferably to the.mixture of the latter with water, it being possible for these antifreeze compositions also to contain additives such as buffering agents, anti-foaming agents and anti-deposit agents and other corrosion inhibitors.